# EUROPEAN PATENT APPLICATION

(11) **EP 4 622 205 A1**
(43) Date of publication of application: **24.09.2025**
(21) Application number: 24855873.6
(22) Date of filing: 22.08.2024
(51) Int. Cl.: H04L 41/0273

(54) **DEVICE BINDING METHOD AND APPARATUS, AND DEVICE**

(30) Priority: 23.08.2023 CN 202311073136
(71) Applicant: Huawei Technologies Co., Ltd., Shenzhen, Guangdong 518129 (CN)
(72) Inventor: XING, Zhihao, Shenzhen, Guangdong 518129 (CN); WU, Zhaohui, Shenzhen, Guangdong 518129 (CN); ZHANG, Huimin, Shenzhen, Guangdong 518129 (CN)
(74) Representative: Gill Jennings & Every LLP
(86) International application number: PCT/CN2024/113900
(87) International publication number: WO 2025/040151

(57) **Abstract**

The present disclosure provides a device binding method and apparatus, and a device, and pertains to the field of communication technologies. The method is applied to a controlling device, and the method includes: detecting a binding initiation event; sending a binding request message to a controlled device in a directional manner, where a sending direction of the binding request message points to the controlled device, the binding request message carries identity information, and the identity information is used by the controlled device to perform identity authentication on the controlling device; and receiving a binding response message sent by the controlled device. According to the present disclosure, a problem of complex device binding and low efficiency in a related technology can be resolved.

## Description

The present disclosure claims priority to Chinese Patent Application No. 202311073136.0, filed on August 23, 2023 and entitled "DEVICE BINDING METHOD AND APPARATUS, AND DEVICE", which is incorporated herein by reference in its entirety.

### TECHNICAL FIELD

The present disclosure relates to the field of communication technologies, and in particular, to a device binding method and apparatus, and a device.

### BACKGROUND

With development of embedded technologies and communication technologies, air gesture operations are applied to a growing number of smart devices. Currently, an air gesture control capability is usually implemented on a wearable device such as a watch, a band, a wristband, or an armband. The wearable device is used as a controlling device, and the smart device is used as a controlled device. The controlling device sends a corresponding control message to a target controlled device by detecting a user gesture, and then the target controlled device performs an operation indicated by the control message.

Before controlling the target controlled device, the controlling device needs to be bound to the target controlled device. Currently, binding between the controlling device and the target controlled device is usually implemented in a Bluetooth pairing manner. To be specific, a user enables Bluetooth functions of the controlling device and each controlled device, and searches for Bluetooth of the target controlled device on the controlling device. After the Bluetooth of the target controlled device is found, the user selects the Bluetooth of the target controlled device for pairing. If the pairing succeeds, the binding between the controlling device and the target controlled device is completed.

A Bluetooth pairing operation process is relatively complex. Each time the user binds the controlling device and the target controlled device, the user needs to operate the controlling device and the target controlled device to perform the foregoing Bluetooth pairing process, leading to low efficiency of binding the controlling device and the target controlled device and poor user experience.

### SUMMARY

The present disclosure provides a device binding method and apparatus, and a device, to resolve a problem of a complex binding process in a related technology. Corresponding technical solutions are as follows.

According to a first aspect, a device binding method is provided. The method is applied to a controlling device, and the method includes:
detecting, by the controlling device, a binding initiation event, and sending a binding request message to a controlled device in a directional manner, where a sending direction of the binding request message points to the controlled device, the binding request message carries identity information, and the identity information is used by the controlled device to perform identity authentication on the controlling device; and receiving a binding response message sent by the controlled device.

**In** the solution provided by the present disclosure, after detecting the binding initiation event, the controlling device sends, in a directional manner, the binding request message to the controlled device that a user wants to control. The binding request message is sent, in a directional manner, to the controlled device that the user wants to control, and is not received by another controlled device. Therefore, a process of selecting one from a plurality of controlled devices by the user is omitted, thereby improving device binding efficiency.

**In** a possible implementation, sending the binding request message to the controlled device in the directional manner includes:
sending the binding request message to the controlled device by using a directional infrared signal, a directional ultrasonic signal, or a directional ultra-wideband (Ultra-Wideband, UWB) signal.

In the solution provided in the present disclosure, the binding request message may be sent to the controlled device in a directional manner by using a directional narrow beam. In this way, the binding request message can be received only by a specified controlled device, and is not received by another controlled device.

In a possible implementation, the binding response message is sent after a running status of the controlled device allows remote control and the identity authentication performed by the controlled device on the controlling device succeeds. In this case, the binding response message carries binding acceptance indication information and a communication address of the controlled device.

In the solution provided in the present disclosure, in a case of accepting binding, the controlled device may return the communication address of the controlled device to the controlling device. In this way, the controlling device may subsequently communicate with the controlled device in a wireless communication manner based on the communication address of the controlled device, and send a control instruction.

In a possible implementation, the binding response message is sent after a running status of the controlled device does not allow remote control or the identity authentication performed by the controlled device on the controlling device fails. In this case, the binding response message carries binding rejection cause indication information.

In the solution provided in the present disclosure, in a case of rejecting binding, the controlled device may return a cause for rejecting binding to the controlling device, so that the user may perform corresponding adjustment based on the cause for rejecting binding by the controlled device, and perform the binding again.

In a possible implementation, detecting the binding initiation event includes:
detecting a target gesture motion; or detecting a pressing operation on a target physical button of the controlling device; or detecting a selection operation on a binding function option displayed by the controlling device; or detecting audio that includes target voice content.

In the solution provided in the present disclosure, the user may trigger the binding initiation event in any one of the foregoing manners. When triggering the binding initiation event, the user may adjust a position of the controlling device, so that the sending direction of the binding request message points to any controlled device that the user wants to control. In this way, the binding request message can be received only by such a controlled device, and is not received by another controlled device.

According to a second aspect, a device binding method is provided. The method is applied to a controlling device, and the method includes:
detecting a binding initiation event; sending a wake-up message to a controlled device in a directional manner, where a sending direction of the wake-up message points to the controlled device; receiving a wake-up response message sent by the controlled device, where the wake-up response message carries a communication address of the controlled device; sending a binding request message to the controlled device based on the communication address of the controlled device, where the binding request message carries identity information, and the identity information is used by the controlled device to perform identity authentication on the controlling device; and receiving a binding response message sent by the controlled device.

In a possible implementation, the wake-up response message further carries authentication mode indication information, and before sending the binding request message to the controlled device, the method further includes:
obtaining identity information corresponding to an identity authentication mode.

In a possible implementation, sending the wake-up message to the controlled device in the directional manner includes:
sending the wake-up message to the controlled device by using a directional infrared signal, a directional ultrasonic signal, or a directional ultra-wideband UWB signal.

In a possible implementation, the binding response message is sent after a running status of the controlled device allows remote control and the identity authentication performed by the controlled device on the controlling device succeeds, and the binding response message carries binding acceptance indication information.

In a possible implementation, the binding response message is sent after a running status of the controlled device does not allow remote control or the identity authentication performed by the controlled device on the controlling device fails, and the binding response message carries binding rejection cause indication information.

In a possible implementation, detecting the binding initiation event includes:
detecting a target gesture motion; or detecting a pressing operation on a target physical button of the controlling device; or detecting a selection operation on a binding function option displayed by the controlling device; or detecting audio that includes target voice content.

According to a third aspect, a device binding apparatus is provided. The apparatus is used in a controlling device, and the apparatus includes:
a detection module, configured to detect a binding initiation event;
a sending module, configured to send a binding request message to a controlled device in a directional manner, where a sending direction of the binding request message points to the controlled device, the binding request message carries identity information, and the identity information is used by the controlled device to perform identity authentication on the controlling device; and
a receiving module, configured to receive a binding response message sent by the controlled device.

In a possible implementation, the sending module is configured to:
send the binding request message to the controlled device by using a directional infrared signal, a directional ultrasonic signal, or a directional ultra-wideband UWB signal.

In a possible implementation, the binding response message is sent after a running status of the controlled device allows remote control and the identity authentication performed by the controlled device on the controlling device succeeds, and the binding response message carries binding acceptance indication information and a communication address of the controlled device.

In a possible implementation, the binding response message is sent after a running status of the controlled device does not allow remote control or the identity authentication performed by the controlled device on the controlling device fails, and the binding response message carries binding rejection cause indication information.

In a possible implementation, the detection module is configured to:
detect a target gesture motion; or
detect a pressing operation on a target physical button of the controlling device; or
detect a selection operation on a binding function option displayed by the controlling device; or
detect audio that includes target voice content.

According to a fourth aspect, a device binding apparatus is provided. The apparatus is used in a controlling device, and the apparatus includes:
a detection module, configured to detect a binding initiation event;
a wake-up module, configured to send a wake-up message to a controlled device in a directional manner, where a sending direction of the wake-up message points to the controlled device;
a receiving module, configured to receive a wake-up response message sent by the controlled device, where the wake-up response message carries a communication address of the controlled device; and
a sending module, configured to send a binding request message to the controlled device based on the communication address of the controlled device, where the binding request message carries identity information, and the identity information is used by the controlled device to perform identity authentication on the controlling device; and
the receiving module is configured to receive a binding response message sent by the controlled device.

In a possible implementation, the wake-up response message further carries authentication mode indication information, and the apparatus further includes an obtaining module, configured to:
obtain identity information corresponding to an identity authentication mode.

In a possible implementation, the wake-up module is configured to:
send the wake-up message to the controlled device by using a directional infrared signal, a directional ultrasonic signal, or a directional ultra-wideband UWB signal.

In a possible implementation, the binding response message is sent after a running status of the controlled device allows remote control and the identity authentication performed by the controlled device on the controlling device succeeds, and the binding response message carries binding acceptance indication information.

In a possible implementation, the binding response message is sent after a running status of the controlled device does not allow remote control or the identity authentication performed by the controlled device on the controlling device fails, and the binding response message carries binding rejection cause indication information.

In a possible implementation, the detection module is configured to:
detect a target gesture motion; or
detect a pressing operation on a target physical button of the controlling device; or
detect a selection operation on a binding function option displayed by the controlling device; or
detect audio that includes target voice content.

According to a fifth aspect, a device is provided. The device includes a processor and a memory, and the processor is configured to execute instructions stored in the memory, so that the device performs the device binding method according to the first aspect.

According to a sixth aspect, a computer program product including instructions is provided. When the instructions are run by a device, the device performs the device binding method provided in the first aspect or the second aspect.

According to a seventh aspect, a computer-readable storage medium is provided, including computer program instructions. When the computer program instructions are executed by a device, the device performs the device binding method provided in the first aspect or the second aspect.

### BRIEF DESCRIPTION OF DRAWINGS

FIG. 1 is a schematic flowchart of a device binding method according to an embodiment of the present disclosure;
FIG. 2 is a diagram of a gesture motion according to an embodiment of the present disclosure;
FIG. 3 is a diagram of an implementation scenario according to an embodiment of the present disclosure;
FIG. 4 is a schematic flowchart of a device binding method according to an embodiment of the present disclosure;
FIG. 5 is a diagram of a structure of a controlling device according to an embodiment of the present disclosure;
FIG. 6 is a diagram of a structure of a controlled device according to an embodiment of the present disclosure;
FIG. 7 is a schematic flowchart of a device binding method according to an embodiment of the present disclosure;
FIG. 8 is a diagram of a structure of a controlling device according to an embodiment of the present disclosure;
FIG. 9 is a diagram of a structure of a controlled device according to an embodiment of the present disclosure;
FIG. 10A and FIG. 10B are a schematic flowchart of a device binding method according to an embodiment of the present disclosure;
FIG. 11 is a diagram of a structure of a device binding apparatus according to an embodiment of the present disclosure;
FIG. 12 is a diagram of a structure of a device binding apparatus according to an embodiment of the present disclosure; and
FIG. 13 is a diagram of a structure of a device according to an embodiment of the present disclosure.

### DESCRIPTION OF EMBODIMENTS

To make the objectives, technical solutions, and advantages of the present disclosure clearer, the following further describes the implementations of the present disclosure in detail with reference to the accompanying drawings.

An embodiment of the present disclosure provides a device binding method. The method can conveniently and quickly establish a binding relationship between a controlling device and a controlled device. The controlling device may be a wearable device such as a watch, a band, a wristband, or an armband, and the controlled device may be a large-screen smart device, a small-screen smart device, a smart wearable device, a smart home appliance, and the like.

The large-screen smart device may include a smart television, a desktop or portable computer, a smart screen, and the like. For the large-screen smart device, the controlling device may control the large-screen smart device to pause or resume playback of audio or a video, increase or decrease volume, adjust a playback progress of a video or audio, perform page turning on a picture or a slide, and the like.

The small-screen smart device may include a mobile phone, a tablet computer, an e-book, and the like. For the small-screen smart device, the controlling device may control the small-screen smart device to pause or resume playback of audio or a video, increase or decrease volume, adjust a playback progress of a video or audio, answer or hang up a call, perform page turning on a book or a picture, scroll a document or a web page, and the like.

The smart wearable device may include a headset, smart glasses, and the like. For the smart wearable device, the controlling device may control the smart wearable device to increase or decrease volume, switch tracks, and the like.

The smart home appliance may include a smart speaker, a smart lamp, a smart air conditioner, a smart curtain, a treadmill, and the like. For the smart home appliance, the controlling device may control the smart home appliance to be turned on or off, to increase or decrease (volume, brightness, a temperature, a speed, and the like), and the like.

Before controlling the controlled device, the controlling device needs to be bound to the controlled device first. In a binding phase, a device binding method provided in an embodiment of the present disclosure may be used for implementation. In this method, after detecting a binding initiation event, the controlling device sends, in a directional manner, a binding request message to the controlled device that a user wants to control. The binding request message is sent, in a directional manner, to the controlled device that the user wants to control, and is not received by another controlled device. Therefore, a process of selecting one from a plurality of controlled devices by the user is omitted, thereby improving device binding efficiency.

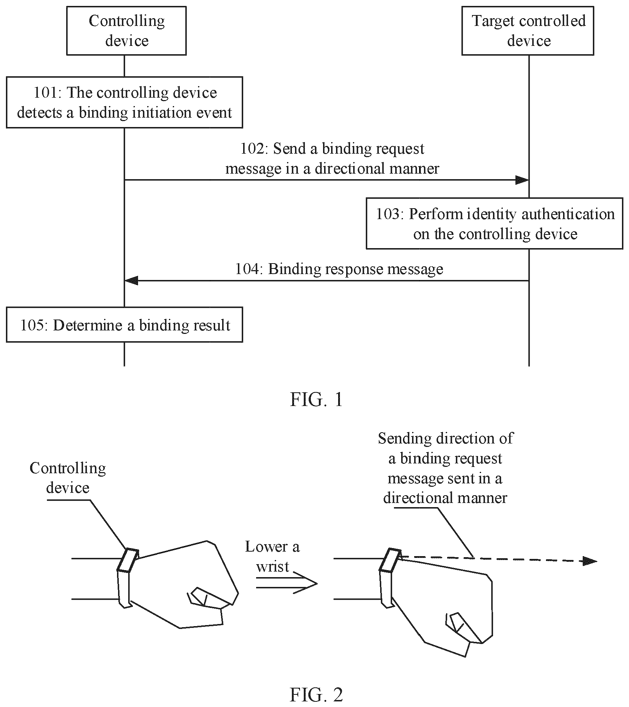

The following describes a device binding method provided in an embodiment of the present disclosure. Refer to FIG. 1. A processing procedure of the method may include the following steps.

Step 101: A controlling device detects a binding initiation event.

During implementation, the binding initiation event may include one or more of the following.
1. A target gesture motion is detected.
   The controlling device may have a gesture recognition function. Specifically, the controlling device may implement gesture recognition based on a combination of one or more of vision, an ultrasonic wave, a millimeter wave, an inertial measurement unit (Inertial Measurement Unit, IMU), and a physical sign signal such as myoelectricity, myodynamia, and photoplethysmography (Photo Plethysmo Graphy, PPG). When the user wants to bind the controlling device and the target controlled device, the user may make the target gesture motion, so that the controlling device can recognize the target gesture motion of the user. The target gesture motion may be designed based on a sending direction of the directional binding request message, and it is recommended that the target gesture motion should not block directional sending of the binding request message. For example, as shown in FIG. 2, the controlling device is a band, and the target gesture motion is an action of lowering a wrist.
2. A pressing operation on a target physical button of the controlling device is detected.
   At least one physical button may be disposed on the controlling device. When the user wants to bind the controlling device and the target controlled device, the user may press the target physical button in the at least one physical button, so that the controlling device can detect the pressing operation performed by the user on the target physical button, and then determine that the binding initiation event is detected.
3. A selection operation on a binding function option displayed by the controlling device is detected.
   A screen may be disposed on the controlling device, at least one function option may be displayed on the screen, and the at least one function option includes the binding function option. When the user wants to bind the controlling device and the target controlled device, the user may perform the selection operation on the binding function option, so that the controlling device can detect the selection operation performed by the user on the binding function option. For example, the selection operation may be tapping, long pressing, sliding, or the like.
4. Audio that includes target voice content is detected.

The controlling device may have an audio collection function. When the user wants to bind the controlling device and the target controlled device, the user may speak out the target voice content, for example, the target voice content may be "Start binding", so that the controlling device can collect and recognize the audio that includes the target voice content.

Step 102: The controlling device sends the binding request message to the target controlled device in a directional manner.

The binding request message carries identity information of the controlling device and a communication address of the controlling device.

During implementation, the controlling device generates the binding request message after detecting the binding initiation event. The identity information of the controlling device and the communication address of the controlling device may be carried in the binding request message. The identity information may include an identity (Identity document, ID) of the controlling device and a to-be-verified password, and the communication address may be a media access control address (Media Access Control Address, MAC) or an Internet protocol address (Internet Protocol Address, IP).

Then, the controlling device sends the binding request message to the target controlled device in a directional manner. The binding request message is a directional narrow beam signal, for example, an infrared light signal, an ultrasonic signal, or an ultra-wideband (ultra-wideband, UWB) signal. On this basis, because the binding request message is directional, when the user wants to bind the controlling device and the target controlled device, the user needs to aim a transmission direction of a narrow beam of the controlling device at the target controlled device. In this way, the binding request message can be received by the target controlled device, and is not received by another controlled device.

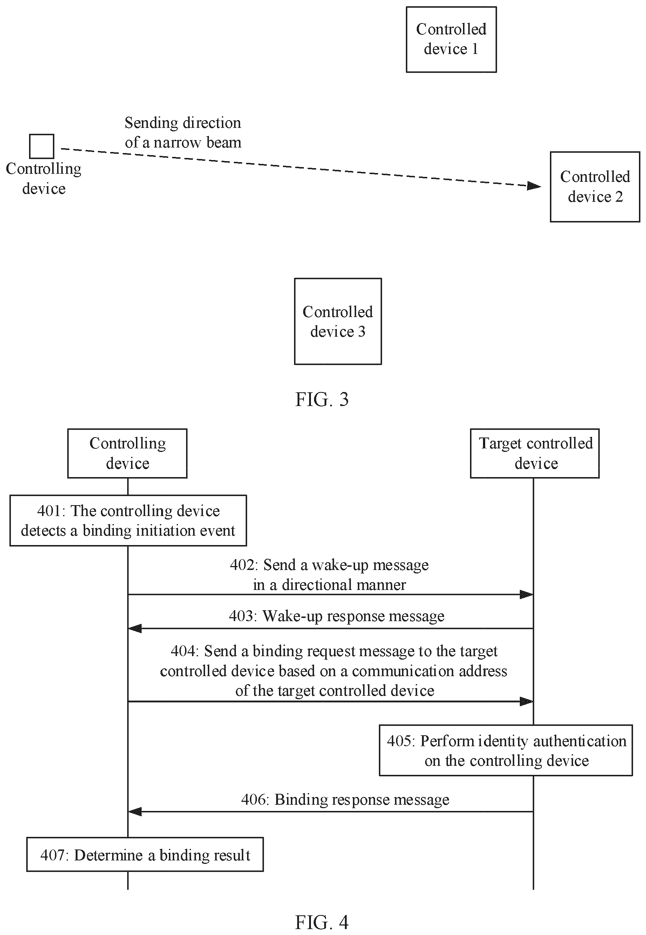

As shown in FIG. 3, in an implementation scenario, there are three controlled devices: a controlled device 1, a controlled device 2, and a controlled device 3. The user wants to bind the controlling device and the controlled device 2, to control the controlled device 2 by using the controlling device. In this case, the user may aim the transmission direction of the narrow beam of the controlling device at the controlled device 2, and trigger the binding initiation event. In this way, after detecting the binding initiation event, the controlling device sends the binding request message to the controlled device 2 in a directional manner.

Step 103: The target controlled device performs identity authentication on the controlling device.

During implementation, the target controlled device may first determine whether a running status of the target controlled device allows remote control, and if determining that the running status of the target controlled device does not allow remote control, the target controlled device rejects binding. If determining that the running status of the target controlled device allows remote control, the target controlled device performs the identity authentication on the controlling device based on the identity information of the controlling device. The following describes the identity authentication by using an example in which the identity information includes the ID of the controlling device and the to-be-verified password. The identity authentication can be performed locally or by using a server. The following describes the two cases separately.

### 1. Local authentication

A trusted device list is locally configured in the target controlled device. As shown in Table 1, correspondences between IDs of controlling devices and verification reference passwords are recorded in the trusted device list.

**Table 1**

| ID of the controlling device | Verification reference password |
|---|---|
| ID 1 | Password 1 |
| ID 2 | Password 2 |
| ID 3 | Password 3 |
| ... | ... |

The target controlled device may query the local trusted device list. If the ID of the controlling device is not found, it is determined that the identity authentication on the controlling device fails, and the binding is rejected, and a cause for rejecting the binding is that the controlling device is an untrusted device. If the ID of the controlling device is found, a verification reference password corresponding to the ID of the controlling device is obtained, and the verification reference password is compared with the to-be-verified password. If the verification reference password is the same as the to-be-verified password, it is determined that the identity authentication on the controlling device succeeds, and the binding is accepted. If the verification reference password is different from the to-be-verified password, it is determined that the identity authentication on the controlling device fails, and the binding is rejected, and a cause for rejecting the binding is that the password is incorrect.

### 2. Server authentication

The trusted device list is configured in a verification server, as shown in Table 1.

The target controlled device may send an identity authentication request to the verification server, and include the ID of the controlling device and the to-be-verified password in the identity authentication request. The verification server queries the trusted device list, and if the ID of the controlling device is not found, it is determined that the identity authentication on the controlling device fails, and a cause for the failure is that the controlling device is an untrusted device. If the ID of the controlling device is found, a verification reference password corresponding to the ID of the controlling device is obtained, and the verification reference password is compared with the to-be-verified password. If the verification reference password is the same as the to-be-verified password, it is determined that the identity authentication on the controlling device succeeds. If the verification reference password is different from the to-be-verified password, it is determined that the identity authentication on the controlling device fails, and a cause for the failure is that the password is incorrect.

Then, the authentication server returns an authentication result to the target controlled device. After receiving the authentication result, the target controlled device parses the authentication result. If the authentication result indicates that the identity authentication succeeds, the binding is accepted. If the authentication result indicates that the identity authentication fails and a cause for the authentication failure, the binding is rejected, and the cause for the authentication failure is used as the cause for rejecting the binding.

Step 104: The target controlled device sends a binding response message to the controlling device.

During implementation, the target controlled device generates a binding response message based on binding acceptance or binding rejection determined in step 103. Specifically, if the binding is accepted, the binding response message carries binding acceptance indication information, an ID of the target controlled device, and a communication address of the target controlled device. If the binding is rejected, the binding response message carries binding rejection cause indication information.

Then, the target controlled device sends the binding response message to the controlling device by using the communication address of the controlling device as a destination address in a wireless communication manner. The wireless communication manner may include a wireless local area network (Wireless Local Area Network, WLAN), Bluetooth, and the like.

The following uses an example to describe a manner in which the binding response message carries the binding acceptance indication information and the binding rejection cause indication information.

The binding response message may include a binding result field. A value in the binding result field is the binding acceptance indication information or the binding rejection cause indication information. Correspondences between values in binding result fields and binding results may be shown in Table 2.

**Table 2**

| Value in the binding result field | Binding result |
|---|---|
| 00 | The binding is accepted |
| 01 | The binding is rejected, and a cause for rejecting the binding is that the controlling device is an untrusted device |
| 10 | The binding is rejected, and a cause for rejecting the binding is that the password is incorrect |
| 11 | The binding is rejected, and a cause for rejecting the binding is that the running status of the target controlled device does not allow remote control |

Step 105: The controlling device determines the binding result.

During implementation, after receiving the binding response message, the controlling device parses the binding response message. If determining that the binding response message carries the binding acceptance indication information, the controlling device obtains the ID of the target controlled device and the communication address of the target controlled device that are carried in the binding response message, and stores the ID and the communication address in a controlled device information storage area. In addition, the controlling device may prompt, in a manner such as voice, an indicator, or displaying prompt text, the user that the binding succeeds. If determining that the binding response message carries the binding rejection cause indication information, the controlling device determines that the binding fails, and may prompt, in a manner such as voice, an indicator, or displaying prompt text, the user that the binding fails and a cause for the binding failure. The cause for the binding failure is the cause for rejecting the binding of the target controlled device.

In a possible implementation, after sending the binding request message, the controlling device may start a binding timeout timer, and start timing after the binding timeout timer is started. If timing duration reaches a preset threshold, but the binding response message is still not received, the controlling device determines that the binding fails. The preset threshold may be configured according to an actual requirement. For example, the preset threshold is 1 second (second, s). In this possible implementation, if the running status of the target controlled device does not allow remote control, or authentication performed by the target controlled device on the controlling device fails, the target controlled device may not send the binding response message to the controlling device. In this way, the controlling device may still determine, through timing of the binding timeout timer, that the binding fails.

An embodiment of the present disclosure further provides a device binding method. In the method, a controlling device may first wake up a target controlled device by using a directional message to learn a communication address of the target controlled device, and then perform identity authentication interaction with the target controlled device by using the communication address of the target controlled device to complete binding. Refer to FIG. 4. A processing procedure of the method may include the following steps.

Step 401: The controlling device detects a binding initiation event.

Implementations of step 401 are the same as or similar to implementations of step 101, and details are not described herein again.

Step 402: The controlling device sends a wake-up message to the target controlled device in a directional manner.

During implementation, the controlling device generates the wake-up message after detecting the binding initiation event. The wake-up message may carry wake-up indication information and a communication address of the controlling device. The wake-up message may be a directional narrow beam signal, for example, an infrared light signal, an ultrasonic signal, or an ultra-wideband (ultra-wideband, UWB) signal. On this basis, because the wake-up message is directional, when a user wants to bind the controlling device and the target controlled device, the user needs to aim a wake-up transmission direction of the controlling device at the target controlled device. In this way, the wake-up message can be received by the target controlled device, and is not received by another controlled device.

Step 403: The target controlled device sends a wake-up response message to the controlling device.

The wake-up response message carries the communication address of the target controlled device.

During implementation, after receiving the wake-up message, the target controlled device parses the wake-up message, and if determining that the wake-up message carries the wake-up indication information, generates the wake-up response message. The wake-up response message may carry the communication address of the target controlled device.

Then, the target controlled device sends the wake-up response message to the controlling device by using the communication address of the controlling device as a destination address in a wireless communication manner.

In a possible implementation, the target controlled device may further specify an identity authentication mode for the controlling device. Correspondingly, the target controlled device may select the identity authentication mode from a plurality of predefined identity authentication modes, and include authentication mode indication information corresponding to the identity authentication mode in the wake-up response message. The identity authentication mode may be static password authentication between the controlling device and the target controlled device, identity authentication between the controlling device and the target controlled device by using a third-party server, or the like.

Step 404: The controlling device sends a binding request message to the target controlled device based on the communication address of the target controlled device.

The binding request message carries identity information of the controlling device and the communication address of the controlling device.

During implementation, in a case in which the target controlled device specifies an identity authentication mode, the controlling device obtains authentication mode indication information carried in a wake-up response message, and determines the identity authentication mode specified by the target controlled device. Then, the controlling device obtains identity information corresponding to the identity authentication mode. For example, if the identity authentication mode is the static password authentication, an ID of the controlling device and a to-be-verified password used for identity authentication are locally obtained as the identity information. The to-be-verified password may be pre-stored in the controlling device.

The controlling device generates the binding request message, and includes the identity information of the controlling device and the communication address of the controlling device in the binding request message. Then, the controlling device sends the binding request message to the target controlled device by using the communication address of the target controlled device as a destination address in a wireless communication manner. The wireless communication manner may include a WLAN, Bluetooth, and the like.

Step 405: The target controlled device performs identity authentication on the controlling device.

Implementations of step 405 are the same as or similar to implementations of step 103, and details are not described herein again.

Step 406: The target controlled device sends a binding response message to the controlling device.

Implementations of step 406 are the same as or similar to implementations of step 104, and details are not described herein again.

Step 407: The controlling device determines the binding result.

Implementations of step 407 are the same as or similar to implementations of step 105, and details are not described herein again.

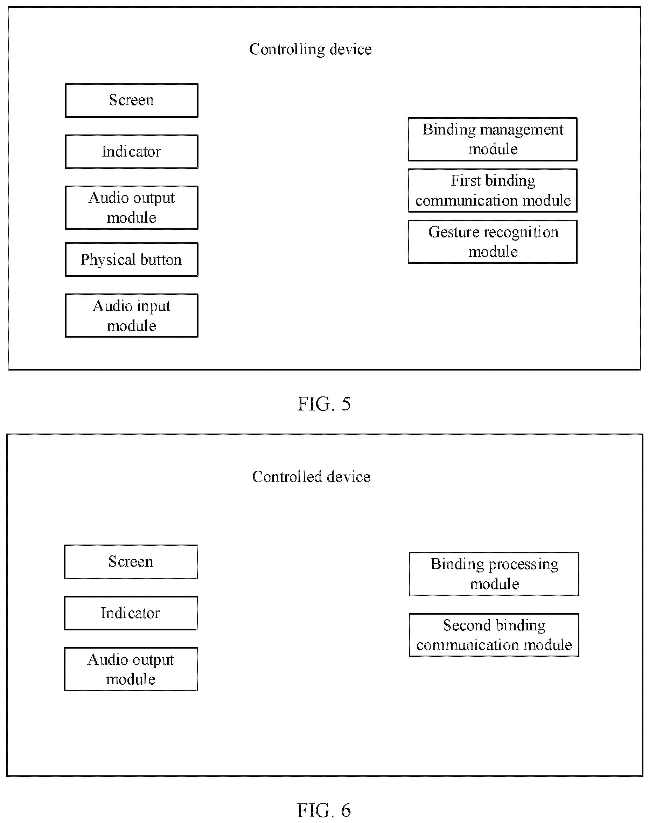

For the device binding method shown in FIG. 1, the controlling device and the controlled device may be divided into different modules. As shown in FIG. 5, the controlling device includes a binding management module, a first binding communication module, and a gesture recognition module. The first binding communication module has a function of sending a directional message. In addition, the controlling device may further include one or more output modules of a screen, an indicator, and an audio output module, and one or more voice input modules of a physical button and a voice input module. As shown in FIG. 6, the controlled device may include a second binding communication module and a binding processing module. The second binding communication module has a function of receiving the directional message. In addition, the controlled device may further include one or more output modules of a screen, an indicator, and an audio output module.

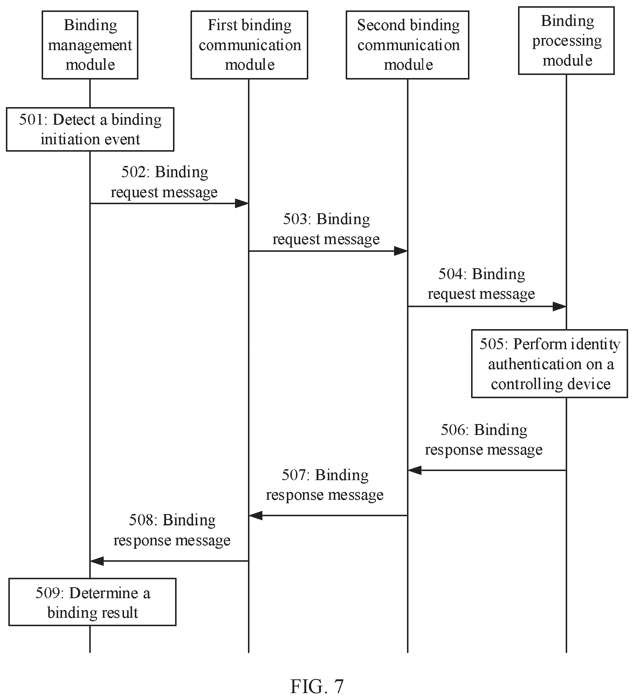

With reference to FIG. 7, the following describes a procedure of interaction between modules when the controlling device and the controlled device implement the device binding method provided in embodiments of the present disclosure. As shown in FIG. 7, an interaction procedure between the modules may include the following steps.

Step 501: The binding management module detects a binding initiation event.

Processing of the binding management module in step 501 is the same as processing of the controlling device in step 101, and details are not described herein again.

Step 502: The binding management module sends a binding request message to the first binding communication module.

During implementation, after detecting the binding initiation event, the binding management module generates the binding request message, and sends a binding request module to the first binding communication module. Identity information of the controlling device and a communication address of the controlling device may be carried in the binding request message.

Step 503: The first binding communication module sends the binding request message to the second binding communication module in a directional manner.

During implementation, the first binding communication module sends the binding request message to the second binding communication module of the target controlled device in a directional manner by using a directional narrow beam. The directional narrow beam may be an infrared light signal, an ultrasonic signal, a UWB signal, or the like.

Step 504: The second binding communication module sends the binding request message to the binding processing module.

Step 505: The binding processing module performs identity authentication on the controlling device.

Processing of the binding processing module in step 505 is the same as processing of the target controlled device in step 103, and details are not described herein again.

Step 506: The binding processing module sends a binding response message to the second binding communication module.

During implementation, the binding processing module generates the binding response message based on binding acceptance or binding rejection determined in step 505. Specifically, if the binding is accepted, the binding response message carries binding acceptance indication information, an ID of the target controlled device, and a communication address of the target controlled device. If the binding is rejected, the binding response message carries binding rejection cause indication information.

Then, the binding processing module sends the generated binding response message to the second binding communication module.

Step 507: The second binding communication module sends the binding response message to the first binding communication module.

During implementation, the second binding communication module sends the binding response message to the first binding communication module of the controlling device by using the communication address of the controlling device as a destination address in a wireless communication manner. The wireless communication manner may include a WLAN, Bluetooth, and the like.

Step 508: The first binding communication module sends the binding response message to the binding management module.

Step 509: The binding management module determines a binding result.

Processing of a binding module in step 509 is the same as processing of the controlling device in step 105, and details are not described herein again.

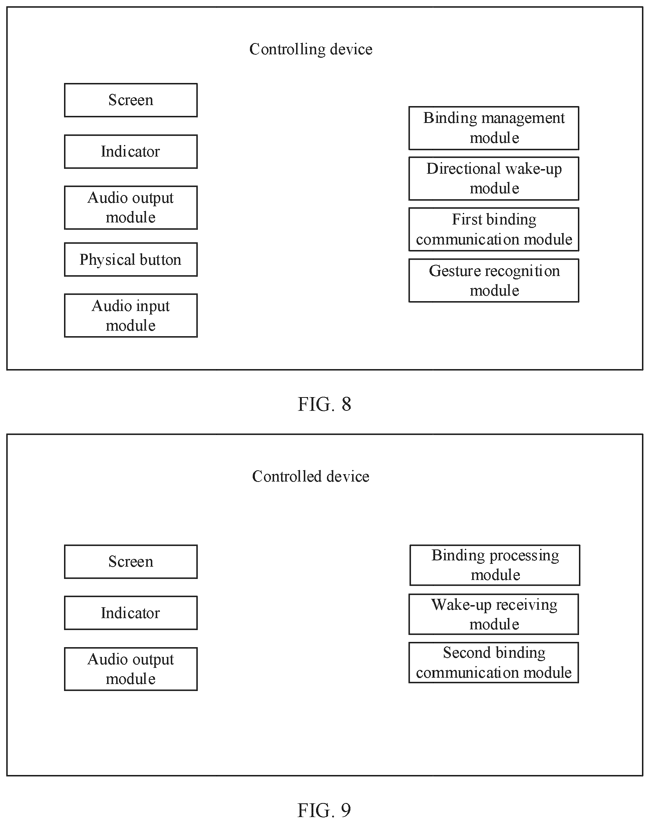

For the device binding method shown in FIG. 4, the controlling device and the controlled device may be divided into different modules. As shown in FIG. 8, the controlling device includes a binding management module, a first binding communication module, a directional wake-up module, and a gesture recognition module. The directional wake-up module has a function of sending a directional message. In addition, the controlling device may further include one or more output modules of a screen, an indicator, and an audio output module, and one or more voice input modules of a physical button and a voice input module. As shown in FIG. 9, the controlled device may include a wake-up receiving message, a second binding communication module, and a binding processing module. The wake-up receiving module has a function of receiving the directional message. In addition, the controlled device may further include one or more output modules of a screen, an indicator, and an audio output module.

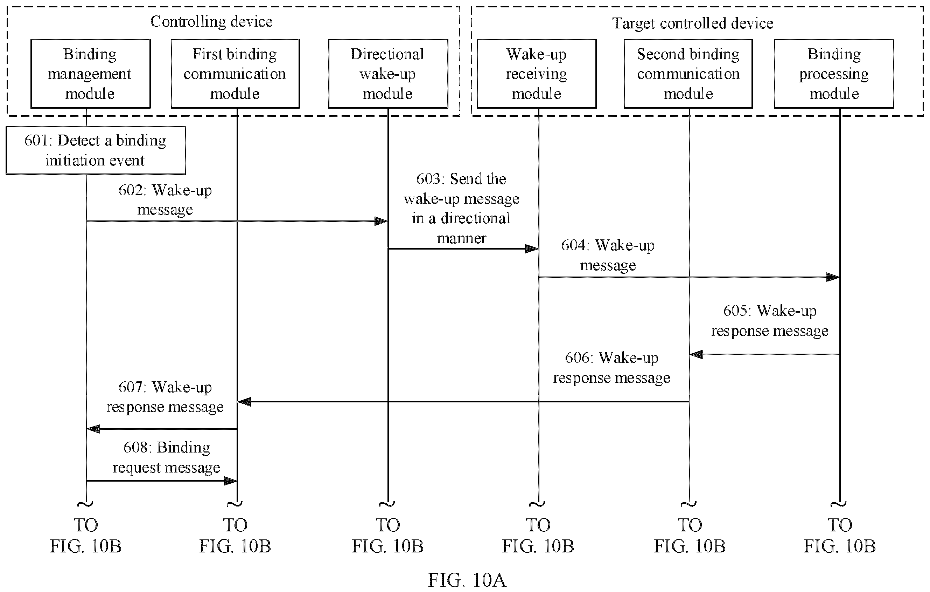

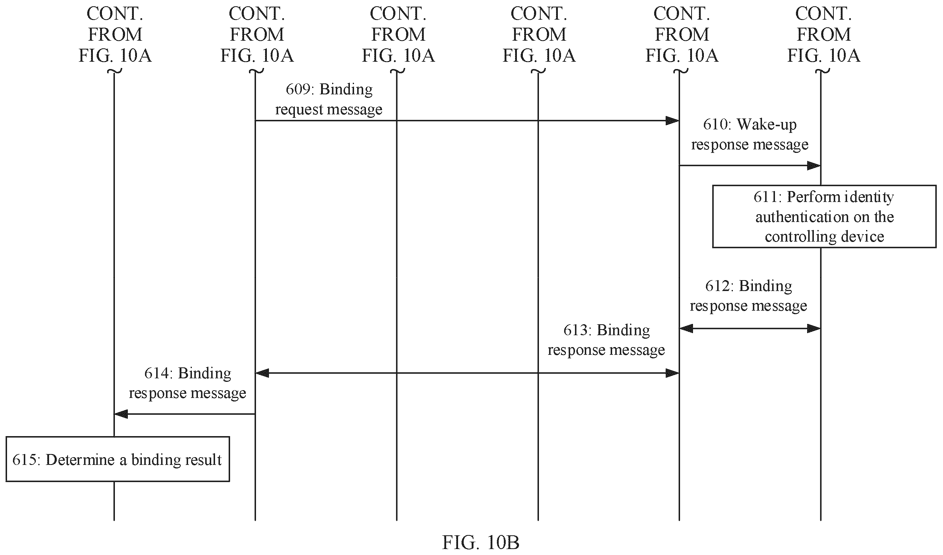

With reference to FIG. 10A and FIG. 10B, the following describes a procedure of interaction between modules when the controlling device and the controlled device implement the device binding method provided in embodiments of the present disclosure. As shown in FIG. 10A and FIG. 10B, an interaction procedure between the modules may include the following steps.

Step 601: The binding management module detects a binding initiation event.

Processing of the binding management module in step 601 is the same as processing of the controlling device in step 401, and details are not described herein again.

Step 602: The binding management module sends a wake-up message to the directional wake-up module.

During implementation, the controlling device generates the wake-up message after detecting the binding initiation event. The wake-up message may carry wake-up indication information and a communication address of the controlling device.

Step 603: The directional wake-up module sends the wake-up message to the wake-up receiving module.

During implementation, the directional wake-up module sends the wake-up message to the second binding communication module of the target controlled device in a directional manner by using a directional narrow beam. The directional narrow beam may be an infrared light signal, an ultrasonic signal, a UWB signal, or the like.

Step 604: The wake-up receiving module sends the wake-up message to the binding processing module.

Step 605: The binding processing module sends a wake-up response message to the second binding communication module.

During implementation, after receiving the wake-up message, the binding processing module parses the wake-up message, and if determining that the wake-up message carries the wake-up indication information, generates the wake-up response message. The wake-up response message may carry a communication address of the target controlled device. Then, the binding processing module sends the wake-up response message to the second binding communication module.

Step 606: The second binding communication module sends the wake-up response message to the first binding communication module.

During implementation, the second binding communication module sends the wake-up response message to the first binding communication module of the controlling device by using the communication address of the controlling device as a destination address in a wireless communication manner. The wireless communication manner may include a WLAN, Bluetooth, and the like.

Step 607: The first binding communication module sends the wake-up response message to the binding management module.

Step 608: The binding management module sends a binding request message to the first binding communication module.

During implementation, in a case in which the target controlled device specifies an identity authentication mode, the binding management module obtains authentication mode indication information carried in the wake-up response message, and determines the identity authentication mode specified by the target controlled device. Then, the binding management module obtains identity information corresponding to the identity authentication mode, and generates the binding request message. Identity information of the controlling device and the communication address of the controlling device are carried in the binding request message.

Then, the binding management module sends the binding request message to the first binding communication module.

Step 609: The first binding communication module sends the binding request message to the second binding communication module.

During implementation, the first binding communication module sends the binding request message to the second binding communication module of the target controlled device by using the communication address of the target controlled device as a destination address in a wireless communication manner.

Step 610: The second binding communication module sends the binding request message to the binding processing module.

Step 611: The binding processing module performs identity authentication on the controlling device.

Processing of the binding management module in step 611 is the same as processing of the controlling device in step 405, and details are not described herein again.

Step 612: The binding processing module sends a binding response message to the second binding communication module.

During implementation, the binding processing module generates the binding response message based on binding acceptance or binding rejection determined in step 611. Specifically, if the binding is accepted, the binding response message carries binding acceptance indication information, an ID of the target controlled device, and the communication address of the target controlled device. If the binding is rejected, the binding response message carries binding rejection cause indication information.

Then, the binding processing module sends the generated binding response message to the second binding communication module.

Step 613: The second binding communication module sends the binding response message to the first binding communication module.

During implementation, the second binding communication module sends the binding response message to the first binding communication module of the controlling device by using the communication address of the controlling device as a destination address in a wireless communication manner. The wireless communication manner may include a WLAN, Bluetooth, and the like.

Step 614: The first binding communication module sends the binding response message to the binding management module.

Step 615: The binding management module determines a binding result.

Processing of the binding management module in step 615 is the same as processing of the controlling device in step 509, and details are not described herein again.

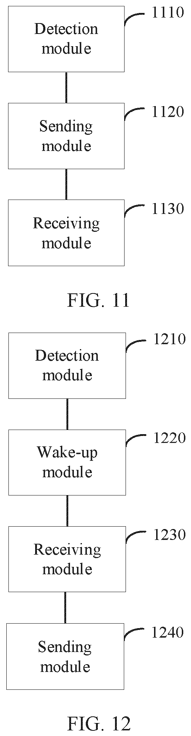

An embodiment of the present disclosure further provides a device binding apparatus. As shown in FIG. 11, the apparatus includes a detection module 1110, a sending module 1120, and a receiving module 1130.

The detection module 1110 is configured to detect a binding initiation event.

The sending module 1120 is configured to send a binding request message to a controlled device in a directional manner. A sending direction of the binding request message points to the controlled device, the binding request message carries identity information, and the identity information is used by the controlled device to perform identity authentication on a controlling device.

The receiving module 1130 is configured to receive a binding response message sent by the controlled device.

In a possible implementation, the sending module 1120 is configured to:
send the binding request message to the controlled device by using a directional infrared signal, a directional ultrasonic signal, or a directional ultra-wideband UWB signal.

In a possible implementation, the binding response message is sent after a running status of the controlled device allows remote control and the identity authentication performed by the controlled device on the controlling device succeeds, and the binding response message carries binding acceptance indication information and a communication address of the controlled device.

In a possible implementation, the binding response message is sent after a running status of the controlled device does not allow remote control or the identity authentication performed by the controlled device on the controlling device fails, and the binding response message carries binding rejection cause indication information.

In a possible implementation, the detection module 1110 is configured to:
detect a target gesture motion; or
detect a pressing operation on a target physical button of the controlling device; or
detect a selection operation on a binding function option displayed by the controlling device; or
detect audio that includes target voice content.

It should be noted that division of the foregoing functional modules is merely used as an example for description when the device binding apparatus provided in the foregoing embodiment performs device binding. During actual application, the foregoing functions may be allocated to different functional modules implementation based on a requirement. To be specific, an inner structure of the controlling device is divided into different functional modules to implement all or some of the functions described above. In addition, the device binding apparatus provided in the foregoing embodiment and the device binding method embodiments pertain to a same concept. For a specific implementation process, refer to the method embodiments. Details are not described herein again.

An embodiment of the present disclosure further provides a device binding apparatus. As shown in FIG. 12, the apparatus includes a detection module 1210, a wake-up module 1220, a receiving module 1230, and a sending module 1240.

The detection module 1210 is configured to detect a binding initiation event.

The wake-up module 1220 is configured to send a wake-up message to a controlled device in a directional manner. A sending direction of the wake-up message points to the controlled device.

The receiving module 1230 is configured to receive a wake-up response message sent by the controlled device. The wake-up response message carries a communication address of the controlled device.

The sending module 1240 is configured to send a binding request message to the controlled device based on the communication address of the controlled device. The binding request message carries identity information, and the identity information is used by the controlled device to perform identity authentication on the controlling device.

The receiving module is configured to receive a binding response message sent by the controlled device.

In a possible implementation, the wake-up response message further carries authentication mode indication information, and the apparatus further includes an obtaining module, configured to:
obtain identity information corresponding to an identity authentication mode.

In a possible implementation, the wake-up module 1220 is configured to:
send the wake-up message to the controlled device by using a directional infrared signal, a directional ultrasonic signal, or a directional ultra-wideband UWB signal.

In a possible implementation, the binding response message is sent after a running status of the controlled device allows remote control and the identity authentication performed by the controlled device on the controlling device succeeds, and the binding response message carries binding acceptance indication information.

In a possible implementation, the binding response message is sent after a running status of the controlled device does not allow remote control or the identity authentication performed by the controlled device on the controlling device fails, and the binding response message carries binding rejection cause indication information.

In a possible implementation, the detection module 1210 is configured to:
detect a target gesture motion; or
detect a pressing operation on a target physical button of the controlling device; or
detect a selection operation on a binding function option displayed by the controlling device; or
detect audio that includes target voice content.

It should be noted that division of the foregoing functional modules is merely used as an example for description when the device binding apparatus provided in the foregoing embodiment performs device binding. During actual application, the foregoing functions may be allocated to different functional modules for implementation based on a requirement. To be specific, an inner structure of the controlling device is divided into different functional modules to implement all or some of the functions described above. In addition, the device binding apparatus provided in the foregoing embodiment and the device binding method embodiments pertain to a same concept. For a specific implementation process, refer to the method embodiments. Details are not described herein again.

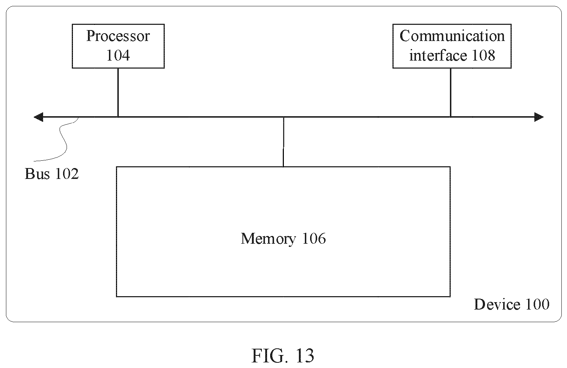

The present disclosure further provides a device 100. The device 100 may be the controlling device in the foregoing embodiments. As shown in FIG. 13, the device 100 includes a bus 102, a processor 104, a memory 106, and a communication interface 108. The processor 104, the memory 106, and the communication interface 108 communicate with each other through the bus 102. The device 100 may be a server or a terminal device. It should be understood that a quantity of processors and a quantity of memories in the device 100 are not limited in the present disclosure.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representation in FIG. 5, but this does not mean that there is only one bus or only one type of bus. The bus 102 may include a path for transferring information between various components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid-state drive (solid state drive, SSD).

The memory 106 stores executable code, and the processor 104 executes the executable code to implement the device binding method.

The communication interface 108 implements communication between the computing device 100 and another device or a communication network by using a transceiver module, for example, but not limited to a network interface card or a transceiver. The communication interface 108 further has a function of sending a directional signal, for example, sending an infrared signal, an ultrasonic signal, or a UWB signal.

An embodiment of the present disclosure further provides a computer program product including instructions. The computer program product may be a software or program product that includes instructions and that can run on a device or be stored in any usable medium. When the computer program product runs on the device, at least one computing device is enabled to perform the device binding method.

Finally, it should be noted that the foregoing embodiments are merely intended to describe the technical solutions of the present disclosure, rather than limit the present disclosure. Although the present disclosure is described in detail with reference to the foregoing embodiments, persons of ordinary skill in the art should understand that they may still make modifications to the technical solutions described in the foregoing embodiments or make equivalent replacements to some technical features thereof. These modifications or replacements do not make the essence of the corresponding technical solutions depart from the protection scope of the technical solutions of embodiments of the present disclosure.

## Claims

1. A device binding method, wherein the method is applied to a controlling device, and the method comprises:
detecting a binding initiation event;
sending a binding request message to a controlled device in a directional manner, wherein a sending direction of the binding request message points to the controlled device, the binding request message carries identity information, and the identity information is used by the controlled device to perform identity authentication on the controlling device; and
receiving a binding response message sent by the controlled device.

2. The method according to claim 1, wherein sending the binding request message to the controlled device in the directional manner comprises:
sending the binding request message to the controlled device by using a directional infrared signal, a directional ultrasonic signal, or a directional ultra-wideband UWB signal.

3. The method according to claim 1 or 2, wherein the binding response message is sent after a running status of the controlled device allows remote control and the identity authentication performed by the controlled device on the controlling device succeeds, and the binding response message carries binding acceptance indication information and a communication address of the controlled device.

4. The method according to claim 1 or 2, wherein the binding response message is sent after a running status of the controlled device does not allow remote control or the identity authentication performed by the controlled device on the controlling device fails, and the binding response message carries binding rejection cause indication information.

5. The method according to any one of claims 1 to 4, wherein detecting the binding initiation event comprises:
detecting a target gesture motion; or
detecting a pressing operation on a target physical button of the controlling device; or
detecting a selection operation on a binding function option displayed by the controlling device; or
detecting audio that comprises target voice content.

6. A device binding method, wherein the method is applied to a controlling device, and the method comprises:
detecting a binding initiation event;
sending a wake-up message to a controlled device in a directional manner, wherein a sending direction of the wake-up message points to the controlled device;
receiving a wake-up response message sent by the controlled device, wherein the wake-up response message carries a communication address of the controlled device;
sending a binding request message to the controlled device based on the communication address of the controlled device, wherein the binding request message carries identity information, and the identity information is used by the controlled device to perform identity authentication on the controlling device; and
receiving a binding response message sent by the controlled device.

7. The method according to claim 6, wherein the wake-up response message further carries authentication mode indication information, and before sending the binding request message to the controlled device, the method further comprises:
obtaining identity information corresponding to the identity authentication mode.

8. The method according to claim 6 or 7, wherein sending the wake-up message to the controlled device in the directional manner comprises:
sending the wake-up message to the controlled device by using a directional infrared signal, a directional ultrasonic signal, or a directional ultra-wideband UWB signal.

9. The method according to any one of claims 6 to 8, wherein the binding response message is sent after a running status of the controlled device allows remote control and the identity authentication performed by the controlled device on the controlling device succeeds, and the binding response message carries binding acceptance indication information.

10. The method according to any one of claims 6 to 8, wherein the binding response message is sent after a running status of the controlled device does not allow remote control or the identity authentication performed by the controlled device on the controlling device fails, and the binding response message carries binding rejection cause indication information.

11. The method according to any one of claims 6 to 10, wherein detecting the binding initiation event comprises:
detecting a target gesture motion; or
detecting a pressing operation on a target physical button of the controlling device; or
detecting a selection operation on a binding function option displayed by the controlling device; or
detecting audio that comprises target voice content.

12. A device binding apparatus, wherein the apparatus is used in a controlling device, and the apparatus comprises:
a detection module, configured to detect a binding initiation event;
a sending module, configured to send a binding request message to a controlled device in a directional manner, wherein a sending direction of the binding request message points to the controlled device, the binding request message carries identity information, and the identity information is used by the controlled device to perform identity authentication on the controlling device; and
a receiving module, configured to receive a binding response message sent by the controlled device.

13. A device binding apparatus, wherein the apparatus is used in a controlling device, and the apparatus comprises:
a detection module, configured to detect a binding initiation event;
a wake-up module, configured to send a wake-up message to a controlled device in a directional manner, wherein a sending direction of the wake-up message points to the controlled device;
a receiving module, configured to receive a wake-up response message sent by the controlled device, wherein the wake-up response message carries a communication address of the controlled device; and
a sending module, configured to send a binding request message to the controlled device based on the communication address of the controlled device, wherein the binding request message carries identity information, and the identity information is used by the controlled device to perform identity authentication on the controlling device; and
the receiving module is configured to receive a binding response message sent by the controlled device.

14. A device, wherein the device comprises a processor and a memory, and the processor is configured to execute instructions stored in the memory, so that the device performs the device binding method according to any one of claims 1 to 11.

15. A computer-readable storage medium, comprising computer program instructions, wherein when the computer program instructions are executed by a device, the device performs the device binding method according to any one of claims 1 to 11.
